# EUROPÄISCHE PATENTANMELDUNG

(11) **EP 4 521 358 A1**
(43) Veröffentlichungstag der Anmeldung: **12.03.2025**
(21) Anmeldenummer: 23196363.8
(22) Anmeldetag: 08.09.2023
(51) Int. Cl.: G06V 10/44, G06V 20/10, G01S 17/931, G06T 7/00, G06V 20/00

(54) **SYSTEM, VERFAHREN UND COMPUTERPROGRAMMPRODUKT ZUR RÄUMLICHEN LOKALISIERUNG MINDESTENS EINES OBJEKTS**

(71) Anmelder: Vorwerk & Co. Interholding GmbH, 42275 Wuppertal (DE)
(72) Erfinder: Hanz, Peter, 47269 Duisburg (DE); Schüler, Sebastian, 42289 Wuppertal (DE)
(74) Vertreter: Dr. Solf & Zapf Patent- und Rechtsanwalts PartG mbB

(57) **Zusammenfassung**

Die vorliegende Erfindung betrifft ein System (1) zur räumlichen Lokalisierung mindestens eines Objekts (2), aufweisend mindestens ein Arbeitsgerät (3) und mindestens eine Datenverarbeitungseinheit (4,4a,4b), wobei das Arbeitsgerät (3) mindestens eine Kamera (8) aufweist und zur autonomen Fortbewegung in einer Umgebung (9) ausgebildet und eingerichtet ist,
wobei die Datenverarbeitungseinheit (4,4a,4b) mindestens einen Prozessor (510) und mindestens einen Speicher (525) aufweist,
wobei die Kamera (8) zum Erfassen mindestens eines Bilddatensatzes ausgebildet und eingerichtet ist, wobei der Bilddatensatz zumindest Bilddaten und räumliche Umgebungsdaten umfasst,
wobei die Datenverarbeitungseinheit (4,4a,4b)

- zum Erkennen (205) mindestens eines Objekts (2) in den Bilddaten unter Verwendung mindestens eines Algorithmus zur Objekterkennung,
- zum Auswählen (210) mindestens eines Ausschnitts (10) aus den Bilddaten, wobei der Ausschnitt (10) zumindest das Objekt (2) beinhaltet,
- zum Anwenden (215) mindestens eines ersten Bildverarbeitungsfilters zur Kantenerkennung auf den Ausschnitt,
- zum Selektieren (220) mindestens eines Punktes einer erkannten Kante anhand des Abstands des Punktes zu mindestens einem Referenzelement in den Bilddaten, und
- zum Zuordnen (225) mindestens eines Abstandswert zu dem Punkt unter Verwendung der räumlichen Umgebungsdaten ausgebildet und eingerichtet ist.

## Beschreibung

Die Erfindung betrifft ein System, ein Verfahren und ein Computerprogrammprodukt zur räumlichen Lokalisierung mindestens eines Objekts in einer Umgebung. Das System weist mindestens ein Arbeitsgerät und mindestens eine Datenverarbeitungseinheit auf.

Aus dem Stand der Technik sind Arbeitsgeräte bekannt, die sich autonom in einer Umgebung fortbewegen und beispielsweise Arbeitsaufgaben erledigen. Bei den Arbeitsgeräten handelt es sich beispielsweise um Fahrzeuge oder Roboter. Bei der Fortbewegung muss eine Kollision mit Objekten in der Umgebung zuverlässig verhindert werden. Ein häufig verwendeter Ansatz zur Erkennung von Objekten durch Arbeitsgeräte besteht in der Nutzung von Kamera- und Bildverarbeitungssystemen. Moderne Arbeitsgeräte sind oft mit hochentwickelten Kameras ausgestattet, die visuelle Informationen über ihre Umgebung liefern. Mithilfe dieser visuellen Daten können sie effizienter navigieren und Objekte identifizieren, um Kollisionen zu verhindern.

Mindestens eine Kamera des Arbeitsgeräts erfasst in regelmäßigen Abständen Bilder der Umgebung, die von einer Datenverarbeitungseinheit analysiert werden. Diese Datenverarbeitungseinheit ist dazu ausgebildet und eingerichtet, verschiedene Objekte und Hindernisse zu erkennen, indem sie beispielsweise Merkmale wie Formen, Farben und Texturen interpretiert.

Bei aus dem Stand der Technik bekannten Arbeitsgeräten werden Objekterkennungsalgorithmen, insbesondere unter Verwendung neuronaler Netze, oftmals mittels pixelgenauer Kennzeichnung von Objekten in Referenzbildern auf die Objekterkennung trainiert. Diese Methode ist aufgrund des hohen Aufwands für die Erstellung der Trainingsdaten, insbesondere die pixelgenaue Kennzeichnung von Objekten, sehr aufwändig und kostenintensiv. Ferner sind die Resultate bei der Verwendung oftmals stark abhängig von den Lichtverhältnissen in der Umgebung.

Der vorliegenden Erfindung liegt daher die Aufgabe zugrunde, ein System, ein Verfahren und ein Computerprogrammprodukt anzugeben, mit denen ein zuverlässiges Erkennen von Objekten mit geringerer Abhängigkeit von den Lichtverhältnissen in der Umgebung und insgesamt reduziertem Aufwand und verringerten Kosten möglich ist.

Die Aufgabe wird durch die Merkmale des Anspruchs 1 gelöst, nämlich mit einem System zur räumlichen Lokalisierung mindestens eines Objekts. Die räumliche Lokalisierung eines Objekts bedeutet dabei zumindest das Ermitteln von Informationen zur Position mindestens eines Objekts relativ zum System, insbesondere relativ zum Arbeitsgerät des Systems, in der Umgebung. Das System weist mindestens ein Arbeitsgerät und mindestens eine Datenverarbeitungseinheit auf. Das Arbeitsgerät weist mindestens eine Sensoreinheit, beispielsweise umfassend mindestens eine Kamera, auf und ist zur autonomen Fortbewegung in der Umgebung, insbesondere einer Bearbeitungsumgebung, ausgebildet und eingerichtet. Mit der Sensoreinheit ist zumindest ein Bilddatensatz mit Bilddaten und räumlichen Umgebungsdaten, z. B. Laufzeitdaten, erfassbar. Die Sensoreinheit ist vorzugsweise derart an dem Arbeitsgerät angeordnet, dass sie zumindest einen Teil der in Fahrtrichtung des Arbeitsgerätes orientierten Umgebung erfassen kann. Vorzugsweise ist das Arbeitsgerät auch zur Erledigung von Arbeitsaufgaben ausgebildet. Beispielsweise ist das Arbeitsgerät als Reinigungsgerät, Transportgerät in der Transportlogistik oder Sicherheitsroboter zur Umgebungsüberwachung ausgebildet.

Die Datenverarbeitungseinheit ist zum Erkennen mindestens eines Objekts in den Bilddaten unter Verwendung mindestens eines Algorithmus zur Objekterkennung, zum Auswählen mindestens eines Ausschnitts aus den Bilddaten, wobei der Ausschnitt zumindest das Objekt beinhaltet, zum Anwenden mindestens eines ersten Bildverarbeitungsfilters zur Kantenerkennung auf den Ausschnitt, zum Selektieren mindestens eines Punktes auf einer erkannten Kante anhand des Abstands des Punktes zu mindestens einem Referenzelement in den Bilddaten, z. B. einer Außengrenze des Ausschnitts, und zum Zuordnen mindestens eines Abstandswert zu dem Punkt unter Verwendung der räumlichen Umgebungsdaten ausgebildet und eingerichtet.

Vorzugsweise ist das Arbeitsgerät als Reinigungsgerät zum Reinigen einer Umgebung, insbesondere einer Bearbeitungsumgebung, ausgebildet. Bei dem als Reinigungsgerät ausgebildeten Arbeitsgerät handelt es sich vorteilhaft um ein Reinigungsgerät mit Saug- und/oder Wischfunktion, insbesondere um einen Saugroboter, einen Wischroboter oder einen Saug- und Wischroboter. Vorzugsweise ist die Datenverarbeitungseinheit zur Steuerung des autonomen Bewegens und des Reinigens der Umgebung durch das Reinigungsgerät ausgebildet und eingerichtet.

Die Sensoreinheit des Arbeitsgeräts ist zum Erfassen mindestens eines Bilddatensatzes ausgebildet und eingerichtet, wobei der Bilddatensatz zumindest Bilddaten und räumliche Umgebungsdaten, z. B. Laufzeitdaten zu mindestens einem Lichtpuls, umfasst. Bei den räumlichen Umgebungsdaten handelt es sich beispielsweise um dreidimensionale Informationen, die die Umgebung des Arbeitsgeräts, insbesondere in Fahrtrichtung des Arbeitsgeräts, repräsentieren. Beispielsweise sind die räumlichen Umgebungsdaten als dreidimensionale Punktwolke, insbesondere basierend auf Abstandswerten, darstellbar.

Es ist vorgesehen, dass die Datenverarbeitungseinheit die Sensoreinheit zum Erfassen mindestens eines Bilddatensatzes ansteuert, oder dass die Sensoreinheit das Erfassen selbst veranlasst. Vorzugsweise weist die Sensoreinheit mindestens einen Time-of-Flight-Sensor, insbesondere eine Time-of-Flight-Kamera, auf. Derartige Kameras werden auch PMD-Kameras genannt. Die Kamera ist insbesondere derart eingerichtet, dass sie für jeden Bildpunkt - jedes Pixel - eine Zeit misst, die das Licht bis zum Objekt und wieder zurück benötigt. Die Laufzeitdaten repräsentieren folglich vorteilhaft für jeden Bildpunkt die Entfernung des in den Bilddaten abgebildeten Objektes zur Kamera bzw. zum Arbeitsgerät.

Ferner ist vorgesehen, dass die Sensoreinheit mindestens eine Kamera zum Erfassen von Bilddaten und/oder mindestens eine Stereokamera und/oder mindestens einen Radarsensor und/oder Lidarsensor aufweist. Es ist ferner vorteilhaft vorgesehen, dass die Sensoreinheit zur Ermittlung der räumlichen Umgebungsdaten mittels Tiefenschätzung, insbesondere mittels Triangulation und/oder Tiefe aus Fokus oder Tiefe aus Bewegung ausgebildet und eingerichtet ist. Die Sensoreinheit weist insbesondere mindestens oder genau einen, mindestens oder genau zwei oder mindestens oder genau drei Sensoren auf. Die Sensoreinheit ist vorteilhaft derart ausgebildet und eingerichtet, dass ein Bilddatensatz mit Bilddaten und räumlichen Umgebungsdaten erfasst bzw. ermittelt werden kann.

Die Triangulation ist eine Methode zur Tiefenschätzung, bei der die räumliche Tiefe eines Punktes in einem Bild durch die Verwendung von Informationen aus zwei oder mehr Blickwinkeln berechnet wird. Die Triangulation verwendet trigonometrische Prinzipien, um die Entfernung zu schätzen. Bei der Ermittlung mittels Tiefe aus Fokus erfolgt eine Variation des Fokus in Bilddaten. Wenn die Kamera auf einen Punkt fokussiert ist, erscheint dieser scharf, während Objekte in unterschiedlicher Entfernung unscharf werden. Die Unschärfe kann verwendet werden, um auf die Tiefe zu schließen. Bei der Ermittlung mittels Tiefe aus Bewegung erfolgt die Verfolgung der Bewegung von Objekten zwischen aufeinanderfolgenden Bildern, wodurch die Tiefe geschätzt werden kann.

Die Datenverarbeitungseinheit weist mindestens einen Prozessor und mindestens einen, insbesondere nichtflüchtigen, Speicher auf. Es ist insbesondere vorgesehen, dass zumindest ein Teil der Datenverarbeitungseinheit in dem Arbeitsgerät angeordnet ist. Vorzugsweise ist die Datenverarbeitungseinheit vollständig in dem Arbeitsgerät angeordnet. Bei dieser Ausführungsform werden folglich jegliche Rechenprozesse von dem Arbeitsgerät selbst erledigt.

Wenn nur ein - erster - Teil der Datenverarbeitungseinheit in dem Arbeitsgerät angeordnet ist, ist es insbesondere vorgesehen, dass ein weiterer - zweiter - Teil der Datenverarbeitungseinheit räumlich entfernt zu dem Arbeitsgerät angeordnet und mit diesem über eine Datenverbindung verbunden bzw. verbindbar ist. Beispielsweise ist der zweite Teil der Datenverarbeitungseinheit als räumlich zum Arbeitsgerät angeordneter Computer, insbesondere Server, ausgebildet.

Ferner ist vorzugsweise vorgesehen, dass zumindest ein Teil der Datenverarbeitungseinheit über eine Datenverbindung, insbesondere ein Netzwerk, beispielsweise das Internet oder ein lokales Netzwerk, mit dem Arbeitsgerät verbunden ist bzw. verbindbar ist. Über das Netzwerk werden dann die Anforderungen für Rechenoperationen an die Datenverarbeitungseinheit übermittelt und das Ergebnis der Rechenoperationen von der Datenverarbeitungseinheit an das Arbeitsgerät übermittelt.

Die Datenverarbeitungseinheit ist erfindungsgemäß zum Erkennen mindestens eines Objektes in den Bilddaten unter Verwendung mindestens eines Algorithmus zur Objekterkennung ausgebildet und eingerichtet. Der Algorithmus zur Objekterkennung umfasst vorzugsweise ein neuronales Netz. Im Rahmen des Erkennens erfolgt insbesondere ein Markieren mindestens eines Ausschnitts, der ein Objekt beinhaltet. Vorzugsweise weist der Ausschnitt eine Form auf, die größer als das Objekt selbst ist. Beispielsweise wird zum Markieren ein rechteckiger Rahmen verwendet. Ein derartiger rechteckiger Rahmen wird auch als "Bounding Box" bezeichnet. Die Objekterkennung erfolgt vorzugsweise mittels eines neuronalen Netzes, das mit Trainingsdaten trainiert worden ist, die Bilder mit Objekten umfassen, die mit Bounding Boxen markiert worden sind.

Der Algorithmus zur Objekterkennung ist jedenfalls derart ausgebildet und eingerichtet, dass er Objekte in Bilddaten erkennen und insbesondere, vorzugsweise mit einem umgebenden Rechteckt, markieren kann. Beispielsweise wird als Objekterkennungsalgorithmus der Open-Source Algorithmus YOLO (You Only Look Once) in der Version 7 (Stand Juli 2022) verwendet. YOLO ist ein leistungsstarker Algorithmus für die Objekterkennung in Echtzeit. Er zeichnet sich durch seine Geschwindigkeit, hohe Genauigkeit und Vielseitigkeit aus. Anders als andere Ansätze verwendet YOLO einen einzelnen Schritt zur Objekterkennung und zeichnet vorteilhaft "Bounding Boxes" um erkannte Objekte. YOLO unterstützt Hardware-Beschleunigung für schnellere Verarbeitung und kann mehrere Objektklassen in einem Bild erkennen. Ferner ist er robust gegenüber verschiedenen Bildgrößen. Alternativ dazu kann auch der Open-Source Algorithmus MobileNet in der Version 3 (Stand Mai 2019) als Objekterkennungsalgorithmus verwendet werden.

Die Datenverarbeitungseinheit ist ferner zum Auswählen mindestens eines Ausschnitts, beispielsweise aus einer Mehrzahl von Ausschnitten, aus den Bilddaten ausgebildet und eingerichtet. Ein Ausschnitt enthält jeweils vorzugsweise genau ein Objekt. Das Auswählen umfasst beispielsweise auch das Laden des Ausschnitts in einen temporären Speicher der Datenverarbeitungseinheit, insbesondere um mindestens einen Bildverarbeitungsfilter auf den Ausschnitt anzuwenden. Beispielsweise erfolgt das Auswählen unter Verwendung des Objekterkennungsalgorithmus.

Die Datenverarbeitungseinheit ist nämlich des Weiteren zum Anwenden mindestens eines ersten Bildverarbeitungsfilters zur Kantenerkennung ausgebildet und eingerichtet. Die Kantenerkennung oder Kantendetektion ist Teil einer Segmentierung von Elementen in der Bildverarbeitung. Dabei werden beispielsweise flächige Bereiche in den Bilddaten voneinander getrennt, wenn sie sich entlang gerader oder gekrümmter Linien ausreichend in Farbwert, Grauwert, Helligkeit oder Textur voneinander unterscheiden. Spezielle Kantenoperatoren erkennen derartige Übergänge und können diese als Kanten eines Objekts markieren. Vorteilhaft erfolgt durch das Anwenden des ersten Bildverarbeitungsfilters auf den Ausschnitt das Erkennen zumindest eines Teils einer Kante des in dem Ausschnitt vorhandenen Objektes oder der in den Ausschnitten vorhandenen Objekte. Eine Kante eines Objekts umfasst eine Vielzahl von Punkten, insbesondere Bildpunkten. Eine Kante eines Objekts ist insbesondere durch eine Vielzahl von Punkten darstellbar.

Die Datenverarbeitungseinheit ist ferner zum nachfolgenden Selektieren mindestens eines Punkts der erkannten Kante bzw. auf der erkannten Kante mindestens eines Objekts anhand des Abstands des Punktes zu mindestens einem Referenzelement in den Bilddaten, z. B. einer Außengrenze des Ausschnitts, ausgebildet und eingerichtet. Als Referenzelement in den Bilddaten wird beispielsweise eine Außengrenze der Bilddaten, eine Außengrenze des Ausschnitts, ein Schnittpunkt von Außengrenzen der Bilddaten oder des Ausschnitts, ein Mittelpunkt der Bilddaten oder ein Mittelpunkt des Ausschnitts verwendet. Es ist vorgesehen, dass beispielsweise ein radialer Abstand zu einem Mittelpunkt bestimmt wird. Insbesondere wird das Referenzelement durch mindestens oder genau einen Bildpunkt oder eine Mehrzahl von Bildpunkten repräsentiert. Vorzugsweise wird mindestens ein Punkt der Kante anhand des Kriteriums selektiert, ob er z. B. einen minimalen oder maximalen Abstand zu einer Außengrenze des Ausschnitts aufweist. Beispielsweise wird ein Punkt selektiert, der einen minimalen Abstand zu einer Unterkante einer Außengrenze des Ausschnitts - unterer Rand des Objekts - aufweist oder einen maximalen Abstand zu einer Oberkante des Ausschnitts aufweist. Beispielsweise entspricht ein Punkt einem Bildpunkt - Pixel - in den Bilddaten.

Nachfolgend erfolgt ein Zuordnen mindestens eines Abstandswertes zu dem Punkt unter Verwendung der räumlichen Umgebungsdaten, beispielsweise der Laufzeitdaten, aus dem Bilddatensatz. Zu dem mittels des Bildverarbeitungsverfahrens erkannten und anschließend anhand des Kriteriums des Abstands ausgewählten Punkten wird folglich ein Abstand zur Sensoreinheit bzw. zum Arbeitsgerät zugeordnet. Dadurch hat die Datenverarbeitungseinheit insbesondere den Abstand des Arbeitsgeräts zu mindestens einem Punkt auf einer unteren Kante des Objekts ermittelt, der für die Navigation des Arbeitsgeräts verwendet werden kann, um vorteilhaft eine Kollision mit dem Objekt zu verhindern.

Die Erfindung weist gegenüber dem Stand der Technik den Vorteil auf, dass mindestens ein Punkt, der für die Navigation des Arbeitsgerätes relevant ist, im Rahmen einer zweidimensionalen Bildverarbeitung ausgewählt und anschließend zur dreidimensionalen Objektlokalisierung verwendet werden kann. Es werden folglich nur solchen Punkten Abstandswerte zugeordnet, die auch für die Navigation relevant sind. Durch die Kantenerkennung in den zweidimensionalen Bilddaten wird auch bei schwierigen Lichtverhältnissen ein zuverlässiger Erkennungsgrad erreicht. Ferner weist das System gegenüber dem Stand der Technik den Vorteil auf, dass die Objekterkennung mittels so genannter "Bounding Boxen" gegenüber einer pixelgenauen Erkennung von Objekten deutlich weniger Aufwand verursacht und kostengünstiger ist. Ferner wird durch dieses Vorgehen die erforderliche Rechenzeit reduziert, wodurch beispielsweise eine höhere Fahrgeschwindigkeit des Arbeitsgeräts ermöglicht wird. Durch die Reduzierung des Rechenaufwandes können zudem z. B. günstigere Komponenten verwendet werden und/oder die Akkulaufzeit wird gesteigert.

Um vorteilhaft eine Navigation des Arbeitsgeräts weiter zu verbessern, ist gemäß einer ersten Ausgestaltung des Systems vorgesehen, dass die Datenverarbeitungseinheit zum Selektieren einer Mehrzahl von Punkten der erkannten Kante und zum Zuordnen mindestens eines individuellen Abstandswertes zu jedem Punkt ausgebildet ist. Durch den von der Datenverarbeitungseinheit angewendeten, ersten Bildverarbeitungsfilter wird insbesondere zumindest ein Teil mindestens einer Kante eines Objektes erkannt. Anschließend werden zumindest in dem erkannten Teil der Kante die Punkte selektiert, die beispielsweise ein Kriterium in Bezug auf mindestens ein Referenzelement, insbesondere eine Außengrenze des Ausschnitts, erfüllen, vorzugsweise beispielsweise einen minimalen Abstand zu einer unteren Außengrenze des Ausschnitts aufweisen. Das sind nämlich die Punkte, die eine untere Kante des Objekts darstellen, und die im Raum am nächsten zu dem sich bewegenden Arbeitsgerät angeordnet sind. Diesen Punkten wird jeweils ein Abstandswert basierend auf den vorhandenen, räumlichen Umgebungsdaten, insbesondere der Laufzeitdaten, zugeordnet.

Als besonders vorteilhaft hat es sich gemäß einer weiteren Ausgestaltung des Systems herausgestellt, wenn vorgesehen ist, dass das Selektieren in einer Spalte einer Mehrzahl von nebeneinander angeordneten Spalten in dem Ausschnitt erfolgt.

Das Selektieren erfolgt vorteilhaft spaltenweise in dem Ausschnitt. Beispielsweise wird der Ausschnitt, der insbesondere rechteckig ist, in eine Vielzahl von nebeneinander angeordneten, vertikalen Spalten aufgeteilt. Beispielsweise wird dann in jeder Spalte der Punkt ausgewählt, der ein Abstandskriterium zu einem Referenzelement in der Spalte, z. B. einer Außenkante des Ausschnitts, aufweist, beispielsweise einen minimalen Abstand zu einer Unterkante des Ausschnitts aufweist. In jeder Spalte wird folglich mindestens, vorzugsweise genau, ein Punkt - Bildpunkt - selektiert.

Gemäß einer vorteilhaften Ausgestaltung des Systems ist vorgesehen, dass die Datenverarbeitungseinheit zum Erzeugen von Navigationsdaten für das Arbeitsgerät unter Verwendung des zugeordneten Abstandswertes ausgebildet und eingerichtet ist. Insbesondere ist die Datenverarbeitungseinrichtung zum Betreiben des Arbeitsgeräts unter Verwendung der erzeugten Navigationsdaten ausgebildet und eingerichtet. Beim Erzeugen der Navigationsdaten wird insbesondere mindestens eine Außendimension, z. B. eine Breite, des Arbeitsgeräts berücksichtigt. Es werden folglich nur solche Bereiche für einen Fahrweg zugelassen, die eine für das Arbeitsgerät ausreichende Breite aufweisen. Beispielsweise wird der Punkt oder werden die Punkte, denen jeweils ein Abstandswert zugeordnet ist, bei der Planung eines Navigationspfades verwendet, um eine Kollision mit dem Objekt zu vermeiden. Insbesondere werden die Punkte mit den zugeordneten Abstandswerten in von dem Arbeitsgerät verwendete Kartendaten integriert. Vorzugweise werden die Punkte mit den zugeordneten Abstandswerten verwendet, um bei einer Fortbewegung des Arbeitsgerätes in der Umgebung die Orte zu meiden, deren Abstand zum Arbeitsgerät als Teil der Kante des Objektes bekannt sind. Die relative Position der Kante des Objekts ist vorteilhaft durch die Zuordnung von Abstandswerten mittels der räumlichen Umgebungsdaten bekannt.

Vorzugsweise umfasst das Erzeugen der Navigationsdaten das Projizieren des mindestens einen Punktes, vorzugsweise aller Punkte, denen ein Abstandswert zugeordnet worden ist, in mindestens eine Rasterkarte. Die Rasterkarte wird vorteilhaft für die Navigation des Arbeitsgerätes in der Bearbeitungsumgebung verwendet. In der Rasterkarte ist die Umgebung des Arbeitsgeräts, in der eine autonome Bewegung erfolgt, beispielsweise in, vorzugsweise quadratische, Zellen aufgeteilt. Insbesondere werden die zugeordneten Abstandswerte dazu verwendet, bestimmte Bereiche, insbesondere Zellen, in der Rasterkarte für das Arbeitsgerät zu sperren, so dass das Arbeitsgerät diese Bereiche, insbesondere Zellen, in der Rasterkarte bei einer Fortbewegung meidet.

Zur besonders vorteilhaften Kantenerkennung, insbesondere zum Erkennen mindestens eines Teils einer Kante eines Objektes in den Bilddaten, hat es sich als vorteilhaft herausgestellt, wenn der erste Bildverarbeitungsfilter zum Erkennen einer Kante einen Canny-Algorithmus, insbesondere einen Sobel-Operator, einen Scharr-Operator, einen Laplace-Filter, einen Prewitt-Operator, einen Roberts-Operator oder einen Kirsch-Operator beinhaltet. Insbesondere die Verwendung eines Canny-Algorithmus mit variablen Schwellenwerten ("Adaptive Canny Edge Detection") ist besonders bevorzugt, da sich mit diesem Algorithmus zuverlässige Ergebnisse erzielen lassen.

Um die Qualität der Objekterkennung vorteilhaft zu verbessern, ist gemäß einer weiteren Ausgestaltung des Systems vorgesehen, dass die Datenverarbeitungseinheit zum Anwenden mindestens eines zweiten Bildverarbeitungsfilters zum Reduzieren von Rauschen in dem Ausschnitt ausgebildet und eingerichtet ist. Die Datenverarbeitungseinheit ist dabei derart eingerichtet, dass der zweite Bildverarbeitungsfilter vor der Anwendung des ersten Bildverarbeitungsfilters angewendet wird. Durch dieses Entrauschen - "Denoising" - des Ausschnitts wird vorteilhaft die Qualität der Kantenerkennung verbessert. Als bevorzugter zweiter Bildverarbeitungsfilter hat sich ein Tiefpassfilter, insbesondere ein Gaußscher-Weichzeichner, herausgestellt.

Diese Ausgestaltung hat gegenüber dem Stand der Technik den Vorteil, dass durch die Kombination und Reihenfolge von Standard-Bildverarbeitungsfiltern zuverlässig die relevanten Punkte für eine dreidimensionale Objekterkennung identifiziert werden. Die Kombination der Bildverarbeitungsfilter bewirkt dabei in gewissem Maße eine Unabhängigkeit von der Helligkeit des Objektes und des Hintergrunds. Ferner besteht der Vorteil darin, dass durch eine zuverlässigere Erkennung der Kanten sich das Arbeitsgerät dem Objekt nähern kann, ohne eine Kollision zu verursachen.

Gemäß einer weiteren Ausgestaltung des Systems ist vorgesehen, dass die Datenverarbeitungseinheit zum Überprüfen ausgebildet und eingerichtet ist, ob eine Anzahl von durch das Anwenden des ersten Bildverarbeitungsfilters erkannten Punkten einer Kante des Objektes einen vorbestimmten Schwellenwert erreicht oder überschreitet. Bei Erreichen oder Überschreiten des Schwellenwertes erfolgt ein Selektieren der Punkte der Kante, die ein beschriebenes Abstandskriterium zu den Grenzen des Ausschnitts erfüllen. Wird der vorbestimmte Schwellenwert unterschritten, ist die Datenverarbeitungseinheit dazu ausgebildet und eingerichtet, mindestens einen dritten Datenverarbeitungsfilter auf den Ausschnitt anzuwenden. Bei dem dritten Bildverarbeitungsfilter handelt es sich vorteilhaft um einen Bildverarbeitungsfilter, mit dem Objektkanten hervorhebbar sind. Vorzugsweise beinhaltet der dritte Bildverarbeitungsfilter eine adaptive Histogrammangleichung (AHE) oder eine kontrastbegrenzte adaptive Histogrammangleichung (CLAHE).

Eine weitere Ausgestaltung des Systems sieht insbesondere vor, dass die Datenverarbeitungseinheit zum - nochmaligen - Anwenden eines Bildverarbeitungsfilters zur Kantenerkennung ausgebildet und eingerichtet ist. Das - nochmalige - Anwendungen eines Bildverarbeitungsfilters zur Kantenerkennung erfolgt, nachdem der dritte Bildverarbeitungsfilter auf den Ausschnitt angewendet worden ist. Vorzugsweise handelt es sich bei dem Bildverarbeitungsfilter zur Kantenerkennung um den ersten Bildverarbeitungsfilter. Nach dem Anwenden des dritten Bildverarbeitungsfilters wird folglich nochmals eine Kantenerkennung durchgeführt.

Insbesondere um den Erfolg des vorstehend beschriebenen Vorgehens zu überprüfen, ist gemäß einer weiteren Ausgestaltung des Systems vorgesehen, dass die Datenverarbeitungseinheit zum Überprüfen ausgebildet und eingerichtet ist, ob eine Anzahl von durch das - nochmalige - Anwenden eines Bildverarbeitungsfilters zur Kantenerkennung erkannten Punkten einer Kante, nach dem Anwenden des dritten Bildverarbeitungsfilters, einen vorbestimmten Schwellenwert erreicht oder überschreitet. Bei Erreichen oder Überschreiten des Schwellenwertes erfolgt das Selektieren von einzelnen Punkten. Der Schwellenwert bei der ersten Überprüfung und bei der zweiten Überprüfung sind vorzugsweise identisch.

Erreicht die Anzahl der erkannten Punkte der Kante den Schwellenwert nicht, ist die Datenverarbeitungseinheit dazu eingerichtet und ausgebildet, mindestens einen vierten Bildverarbeitungsfilter auf den Ausschnitt anzuwenden. Beispielsweise handelt es sich bei dem vierten Bildverarbeitungsfilter um ein Schwellenwert-Verfahren zur Segmentierung. Als vorteilhaft hat sich als vierter Bildverarbeitungsfilter die Verwendung des Otsu-Verfahrens herausgestellt. Das Otsu-Verfahren bestimmt einen Schwellenwert, bei dem die Streuung innerhalb der dadurch bestimmten Klassen möglichst klein, zwischen den Klassen gleichzeitig aber möglichst groß ist. Dazu wird der Quotient zwischen den beiden Varianzen gebildet und ein Schwellenwert gesucht, bei dem dieser möglichst groß (maximal) wird.

Die Verwendung des vierten Bildverarbeitungsfilters stellt somit eine Rückfallposition dar, wenn mit den vorangehenden Bildverarbeitungsfiltern keine ausreichende Anzahl an Punkten auf einer Kante identifiziert werden konnte.

Nach der Anwendung des vierten Bildverarbeitungsfilters erfolgt vorteilhaft für die dann erkannten Punkte der Kanten des Objektes ein Selektieren sowie vorzugsweise das Erzeugen von Navigationsdaten wie vorstehend beschrieben.

Die Datenverarbeitungseinrichtung ist vorteilhaft zur Anwendung von mindestens oder genau einem, mindestens oder genau zwei, mindestens oder genau drei, mindestens oder genau vier Bildverarbeitungsfiltern auf die Bilddaten, insbesondere ein Bild der Umgebung, ausgebildet und eingerichtet.

Die Erfindung betrifft ferner ein Verfahren zur räumlichen Lokalisierung mindestens eines Objekts. Das Verfahren wird vorzugsweise zumindest teilweise von einem Arbeitsgerät, insbesondere einem Reinigungsgerät, ausgeführt. Das Arbeitsgerät ist vorteilhaft wie beschrieben ausgebildet und weist insbesondere zumindest einen Teil einer Datenverarbeitungseinheit auf. Das Verfahren ist gekennzeichnet zumindest durch folgende Verfahrensschritte:
- Erfassen mindestens eines Bilddatensatzes mit mindestens einer Sensoreinheit, wobei der Bilddatensatz zumindest Bilddaten und räumliche Umgebungsdaten, z. B. Laufzeitdaten zu mindestens einem Lichtpuls, umfasst,
- Erkennen mindestens eines Objekts in den Bilddaten unter Verwendung mindestens eines Algorithmus zur Objekterkennung,
- Auswählen mindestens eines Ausschnitts aus den Bilddaten, wobei der Ausschnitt zumindest das Objekt beinhaltet,
- Anwenden mindestens eines ersten Bildverarbeitungsfilters zur Kantenerkennung auf den Ausschnitt,
- Selektieren mindestens eines Punktes einer erkannten Kante anhand des Abstands des Punktes zu mindestens einem Referenzelement, z. B. einer Außengrenze des Ausschnitts, und
- Zuordnen mindestens eines Abstandswerts zu dem Punkt unter Verwendung der räumlichen Umgebungsdaten, z. B. Laufzeitdaten.

Die Ausführungen zur Funktion des Systems können auf das Verfahren übertragen werden, so dass auf die Beschreibung insoweit Bezug genommen wird.

Die Erfindung betrifft ferner ein Computerprogrammprodukt, umfassend Befehle, die bei der Ausführung des Programms durch eine Datenverarbeitungseinheit, mit mindestens einem Prozessor und mindestens einem Speicher, die Datenverarbeitungseinheit veranlassen, die Schritte des beschriebenen Verfahrens auszuführen.

Weitere vorteilhafte Ausgestaltungen der Erfindung ergeben sich aus der folgenden Figurenbeschreibung und den abhängigen Unteransprüchen.

Es zeigen:
- Fig. 1: ein Ausführungsbeispiel eines Systems,
- Fig. 2: schematische Abläufe von Funktionsweisen von Ausführungsbeispielen eines Systems,
- Fig. 3a-3g: beispielhafte Schritte der Bildverarbeitung,
- Fig. 4a, 4b: ein Ausführungsbeispiel einer Rasterkarte für ein Arbeitsgerät, und
- Fig. 5: ein Ausführungsbeispiel einer Datenverarbeitungseinheit.

In den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

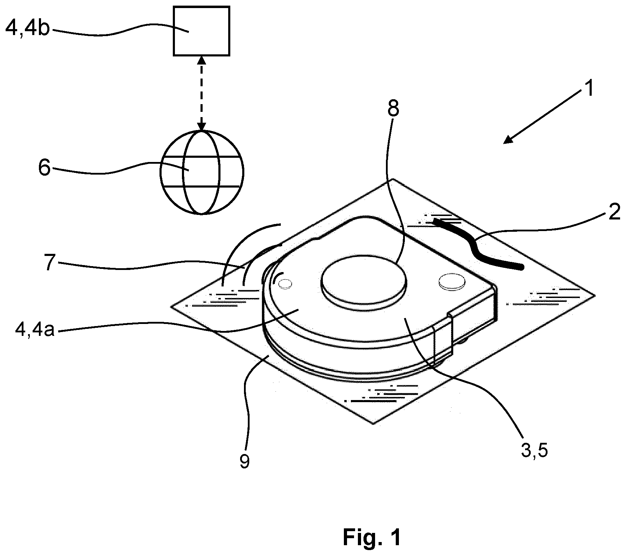

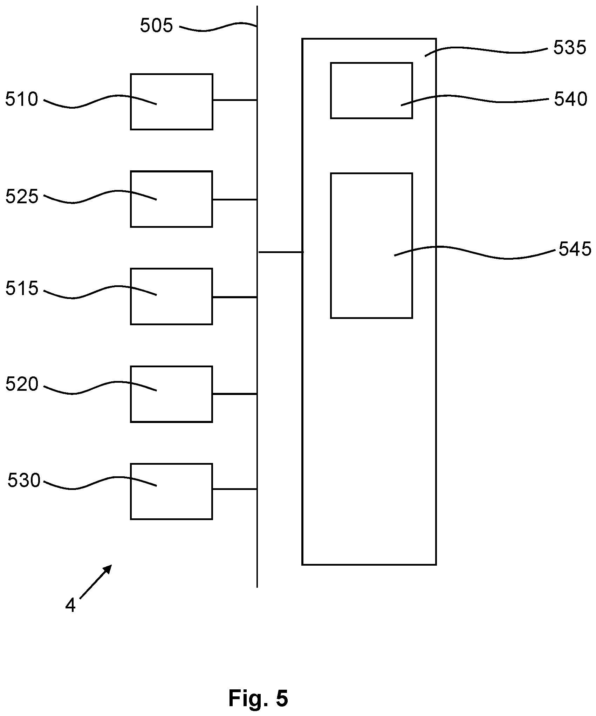

Fig. 1 zeigt ein System 1 zur räumlichen Lokalisierung mindestens eines Objekts 2 in einer Umgebung 9. Das System 1 weist mindestens ein Arbeitsgerät 3 und mindestens eine Datenverarbeitungseinheit 4 auf. Bei diesem Ausführungsbeispiel ist das Arbeitsgerät 3 als Reinigungsroboter ausgebildet. Ein erster Teil 4a der Datenverarbeitungseinheit 4 ist innerhalb eines Gehäuses 5 des Arbeitsgeräts 3 angeordnet. Ein zweiter Teil 4b der Datenverarbeitungseinheit 4 ist als Computer ausgebildet, der räumlich entfernt zu dem Arbeitsgerät 3 angeordnet ist, und über ein Datennetz 6, hier das Internet, mit dem Arbeitsgerät 3 verbunden ist. Das Arbeitsgerät 3 ist - zumindest mittelbar - mit einer Funkverbindung 7 mit dem Datennetz 6 verbunden. Zu weiteren Details der Ausgestaltung der Datenverarbeitungseinheit 4 wird Bezug auf Fig. 5 genommen, wobei die Datenverarbeitungseinheit 4 mindestens einen Prozessor 510 und mindestens einen Speicher 525 aufweist.

Das Arbeitsgerät 3 weist gemäß Fig. 1 mindestens eine Sensoreinheit 8 zum Erfassen mindestens eines Bilddatensatzes auf. Die Sensoreinheit 8 ist vorteilhaft als Time-of-Flight-Kamera ausgebildet, so dass der Bilddatensatz Bilddaten und räumliche Umgebungsdaten, hier Laufzeitdaten zu mindestens einem Lichtpuls je Bildpunkt, umfasst. Das Arbeitsgerät 3 ist zur autonomen Fortbewegung und zur Erledigung von Arbeitsaufgaben - hier Reinigungsaufgaben - in der Umgebung 9 ausgebildet.

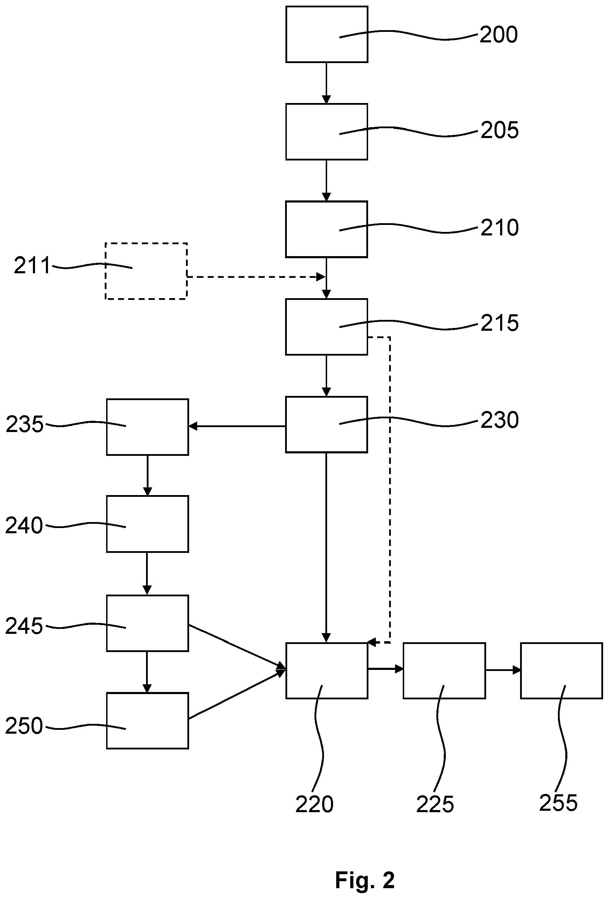

Eine beispielhafte Darstellung von schematischen Abläufen von Funktionsweisen eines Systems 1 ist in Fig. 2 dargestellt. Die beschriebenen Schritte werden von der Datenverarbeitungseinheit 4 veranlasst oder ausgeführt. Die Datenverarbeitungseinheit 4 ist derart ausgebildet und eingerichtet, dass zunächst ein Erfassen 200 mindestens eines Bilddatensatzes mit der Sensoreinheit 8 erfolgt bzw. erfolgen kann. Das Erfassen 200 wird beispielsweise von der Datenverarbeitungseinheit 4 veranlasst und von der Sensoreinheit 8 ausgeführt. Der erfasste Bilddatensatz weist zumindest Bilddaten und räumliche Umgebungsdaten, hier Lautzeitdaten zu mindestens einem Lichtpuls, auf. Die Bilddaten sind vorzugsweise die Daten, die sich als Bild grafisch darstellen lassen.

Die Datenverarbeitungseinheit 4 ist ferner zum Erkennen 205 mindestens eines Objektes 2 in den Bilddaten unter Verwendung eines Algorithmus zur Objekterkennung ausgebildet und eingerichtet. Bei dem Erkennen 205 wird vorzugsweise ein Bilderkennungsalgorithmus verwendet, der mittels Bildern trainiert worden ist, in denen Objekte mittels einer "Bounding-Box" gekennzeichnet sind.

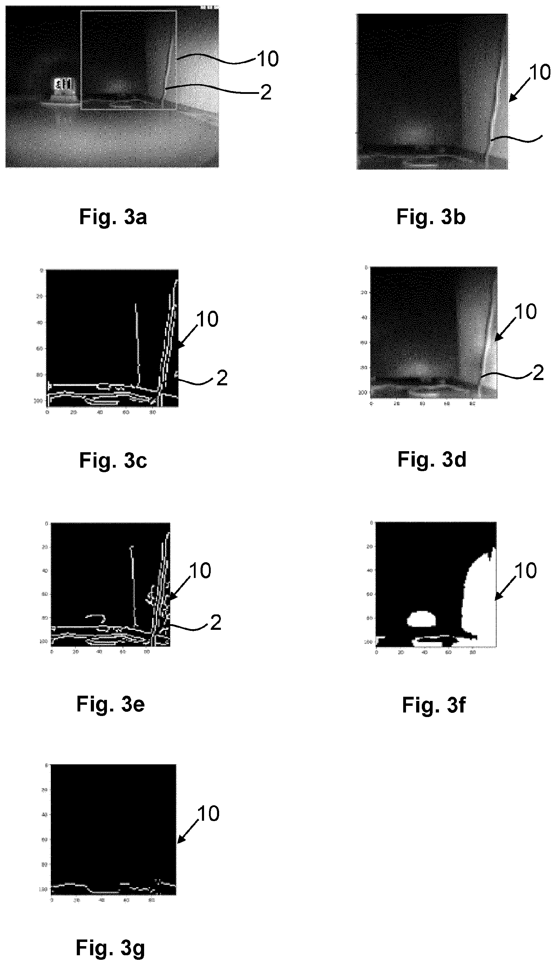

Ein Beispiel von erfassten Bilddaten mit einem erkannten Objekt 10, das in den Bilddaten mit einer rechteckigen "Bounding-Box" gekennzeichnet ist, ist in Fig. 3a dargestellt. Das Objekt 2 ist hier beispielsweise ein Kabel. Ein Ausschnitt 10 ist in den Bilddaten markiert.

Nach dem Erkennen 205 eines Objektes 2 in den Bilddaten gemäß Fig. 2 ist die Datenverarbeitungseinheit 4 zum Auswählen 210 mindestens eines Ausschnitts 10 aus den Bilddaten ausgebildet und eingerichtet, wobei der Ausschnitt 10 zumindest das Objekt 2 beinhaltet. Ein Beispiel für einen ausgewählten Ausschnitt 10 ist in Fig. 3b dargestellt. Der Ausschnitt 10 entspricht dem Ausschnitt 10 gemäß Fig. 3a

Ferner ist die Datenverarbeitungseinheit 4 zum Anwenden 215 mindestens eines ersten Bildverarbeitungsfilters zur Kantenerkennung ausgebildet und eingerichtet. Durch das Anwenden 215 des ersten Bildverarbeitungsfilters auf den Ausschnitt 10 ist beispielsweise mindestens ein Teil einer Kante des Objektes 2 in dem Ausschnitt 10 erkennbar. Vorzugsweise beinhaltet der erste Bildverarbeitungsfilter einen Canny-Algorithmus mit variablen Schwellenwerten ("Adaptive Canny Edge Detection"). Ein Beispiel des Ausschnitts 10 nach der Anwendung des ersten Bildverarbeitungsfilters mit einem Canny-Algorithmus mit variablen Schwellenwerten ist in Fig. 3c dargestellt. Deutlich zu erkennen sind die Kanten des Objekts 2, hier eines Kabels.

Bei einer ersten Variante der Funktion erfolgt nach dem Anwenden 215 unmittelbar ein Selektieren 220 mindestens eines Punktes der Kante des Objekts 2 anhand des Abstands des Punktes zu mindestens einer Außengrenze des Ausschnitts 10 als Referenzelement. Vorzugsweise wird mindestens ein Punkt mit einem minimalen Abstand zu einer unteren Außengrenze des Ausschnitts 10 selektiert. Sobald das Selektieren 220 mindestens eines Punktes abgeschlossen ist, erfolgt ein Zuordnen 225 mindestens eines Abstandswertes zu dem Punkt unter Verwendung der räumlichen Umgebungsdaten, hier der Laufzeitdaten. Der Abstandswert entspricht dem Abstand des selektierten Punktes zur Sensoreinheit 8 bzw. zum Arbeitsgerät. Der Abstandswert wird unter Verwendung der Laufzeitdaten für den zugehörigen Bildpunkt ermittelt.

Gemäß einer zweiten Variante der Funktion erfolgt vor dem Anwenden 215 des ersten Bildverarbeitungsfilters das Anwenden 211 eines zweiten Bildverarbeitungsfilters zum Reduzieren von Rauschen in dem Ausschnitt 10. Ein Beispiel eines Ausschnitts 10, in dem das Rauschen reduziert worden ist, ist in Fig. 3b dargestellt. Der zweite Bildverarbeitungsfilter beinhaltet einen Gaußschen Weichzeichner. Nachdem dann das Anwenden 215 des ersten Bildverarbeitungsfilters erfolgt ist, erfolgt das Selektieren 220. Alternativ dazu erfolgt nach dem Anwenden 215 gemäß einer dritten Variante der Funktion vorteilhaft ein Überprüfen 230 durch die Datenverarbeitungseinheit 4, ob eine Anzahl von mittels des ersten Bildverarbeitungsfilters erkannten Punkten einer Kante eines Objekts 2 einen Schwellenwert erreicht oder überschreitet. Wenn der Schwellenwert erreicht oder überschritten wird, erfolgt das Selektieren 220.

Wird der Schwellenwert nicht erreicht bzw. unterschritten, ist die Datenverarbeitungseinheit 4 zum Anwenden 235 mindestens eines dritten Bildverarbeitungsfilters auf den Ausschnitt 10 ausgebildet und eingerichtet. Der dritte Bildverarbeitungsfilter beinhaltet vorzugsweise eine kontrastbegrenzte adaptive Histogrammangleichung (CLAHE). Ein Beispiel eines Ausschnitts 10 nach dem Anwenden des dritten Bildverarbeitungsfilters in Form einer kontrastbegrenzten adaptiven Histogrammangleichung (CLAHE) ist in Fig. 3d dargestellt. Bei diesem Ausschnitt 10 erfolgte zuvor ebenfalls ein Anwenden 211 des zweiten Bildverarbeitungsfilters.

Nach dem Anwenden 235 des dritten Bildverarbeitungsfilters erfolgt bei diesem Ausführungsbeispiel das nochmalige Anwenden 240 des ersten Bildverarbeitungsfilters, nämlich des Canny-Algorithmus mit variablen Schwellenwerten ("Adaptive Canny Edge Detection"). Ein Ausschnitt 10, auf den der erste Bildverarbeitungsfilter nochmals angewendet worden ist, ist in Fig. 3e dargestellt. Die Kanten des Objekts, hier eines Kabels, sind deutlich zu erkennen.

Anschließend erfolgt ein weiteres Überprüfen 245 durch die Datenverarbeitungseinheit 4, ob eine Anzahl von - durch das nochmalige Anwenden 240 des ersten Bildverarbeitungsfilters erkannten - Punkten einer Kante des Objekts 2 einen vorbestimmten Schwellenwert erreicht oder überschreitet. Wird der Schwellenwert erreicht oder überschritten, erfolgt das Selektieren 220.

Wird der Schwellenwert unterschritten, erfolgt gemäß Fig. 2 das Anwenden 250 eines vierten Bildverarbeitungsfilters, der bei diesem Ausführungsbeispiel das Otsu-Verfahren beinhaltet. Ein Beispiel eines Ausschnitts 10, auf den das Otsu-Verfahren angewendet worden ist, ist in Fig. 3f dargestellt. Nach dem Anwenden 250 des vierten Bildverarbeitungsfilters erfolgt stets ein Selektieren 220 von Punkten der erkannten Kante, die ein Abstandskriterium erfüllen. Fig. 3g zeigt beispielhaft eine Mehrzahl von Punkten einer vorderen Kante eines Objekts 10, die selektiert worden sind.

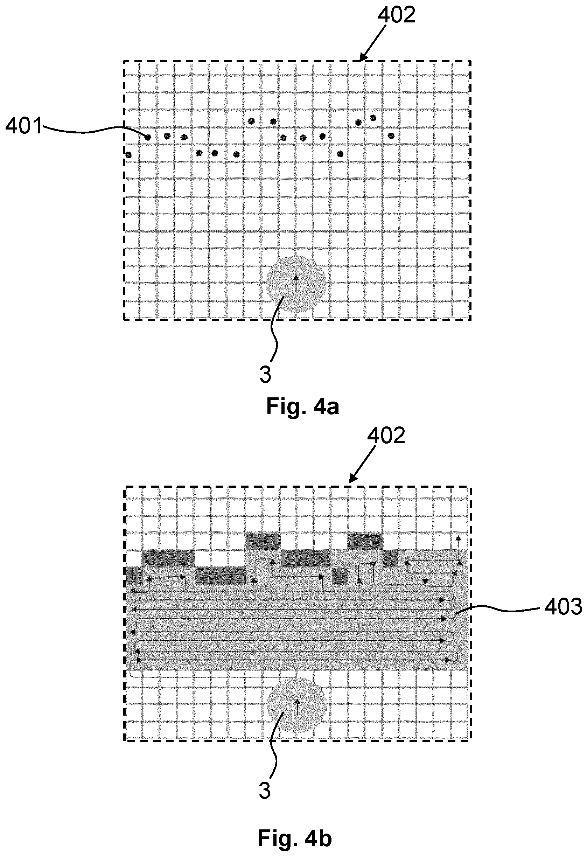

Abschließend erfolgt bei allen Varianten der Funktionsweise das Erzeugen 255 von Navigationsdaten unter Verwendung des zugeordneten Abstandswertes, wobei das Erzeugen 255 der Navigationsdaten das Projizieren mindestens eines Punktes in mindestens eine Rasterkarte beinhaltet. Ein Beispiel einer Rasterkarte 402 für eine Navigation eines Arbeitsgeräts ist in Fig. 4a dargestellt. Beispielhaft sind in der Rasterkarte 402 alle selektierten Punkte 401 unter Verwendung ihrer Abstandswerte eingetragen. Der Abstand der Punkte 401 in der Rasterkarte 402 zu dem ebenfalls beispielhaft dargestellten Arbeitsgerät 3 entspricht proportional also in etwa dem Abstand des Arbeitsgeräts 3 zu dem Objekt 2 in der Umgebung 9, insbesondere einer vorderen Kante des Objekts 2. Die Rasterkarte kann von dem Arbeitsgerät 3 zur Navigation verwendet werden.

Fig. 4b zeigt ein Beispiel einer Rasterkarte 402 mit einem Navigationspfad 403 für ein dargestelltes Arbeitsgerät 3. In der Rasterkarte 402 sind die Zellen, in denen jeweils ein Punkt 401 vorhanden war, als gesperrte Zellen dunkel markiert, so dass diese nicht im Navigationspfad 403 enthalten sind und bei der Fortbewegung des Arbeitsgeräts 3 durch die Umgebung 9 gemieden werden.

Fig. 5 zeigt eine vereinfachte Datenverarbeitungseinheit 4 für ein System 1 der beschriebenen Ausführungsbeispiele. Es ist auch vorgesehen, dass einzelne Elemente der Datenverarbeitungseinheit 4 mehrfach vorhanden sind, insbesondere wenn die Datenverarbeitungseinheit 4 teilweise in einem Arbeitsgerät 3 und teilweise von einem räumlich entfernten Computer realisiert ist. Fig. 5 zeigt eine schematische Darstellung einer Ausführungsform einer Datenverarbeitungseinheit 4, die einige oder alle Schritte zu den in den verschiedenen Ausführungsformen beschriebenen Verfahren bzw. deren Schritte ausführen kann.

Die Datenverarbeitungseinheit 4 ist mit Hardwareelementen dargestellt, die über einen Bus 505 elektrisch gekoppelt sind oder gegebenenfalls auf andere Weise miteinander kommunizieren. Die Hardwareelemente können einen oder mehrere Prozessoren 510, einschließlich und ohne Einschränkung einen oder mehrere Allzweckprozessoren und/oder einen oder mehrere Spezialprozessoren, ein oder mehrere Eingabegeräte 515 und ein oder mehrere Ausgabegeräte 520 umfassen. Die Datenverarbeitungseinheit 4 weist ferner eine oder mehrere Speicher 525 auf und/oder steht mit diesen in Verbindung.

Die Datenverarbeitungseinheit 4 kann ferner ein Kommunikationssubsystem 530 aufweisen. In einigen Ausführungsformen umfasst die Datenverarbeitungseinheit 4 außerdem einen Arbeitsspeicher 535. Die Datenverarbeitungseinheit 4 kann auch Software-Elemente enthalten, die sich - wie beispielhaft dargestellt - im Arbeitsspeicher 535 befinden. Davon umfasst sein können ein Betriebssystem 540, Gerätetreiber, ausführbare Bibliotheken und/oder ein anderer Code, beispielsweise ein oder mehrere Anwendungsprogramme 545.

Lediglich beispielhaft können eine oder mehrere Schritte, die in Bezug auf die Funktionen des Systems oder das Verfahren beschrieben sind, als Code und/oder Anweisungen implementiert werden, die von einem Computer und/oder einem Prozessor innerhalb eines Computers ausführbar sind; in einem Aspekt können dann ein solcher Code und/oder solche Anweisungen verwendet werden, um einen Allzweckcomputer oder ein anderes Gerät zu konfigurieren und/oder anzupassen, um eine oder mehrere Schritte gemäß den beschriebenen Verfahren oder Funktionen des Systems auszuführen.

Ein Teil dieser Anweisungen und/oder der Code kann auf einem, computerlesbaren Speichermedium, wie dem/den oben beschriebenen Speicher 525, gespeichert werden. Wie oben erwähnt, können in einem Aspekt einige Ausführungsformen ein Computersystem wie die Datenverarbeitungseinheit 4 verwenden, um Verfahren in Übereinstimmung mit verschiedenen Ausführungsformen bzw. die Funktionen des Systems auszuführen. Gemäß einer Ausführungsform werden einige oder alle Schritte eines Verfahrens oder Funktionen des Systems 1 von der Datenverarbeitungseinheit 4 als Reaktion auf die Ausführung einer oder mehrerer Sequenzen von einem oder mehreren Befehlen durch den Prozessor 510 durchgeführt, die in das Betriebssystem 540 und/oder einen anderen Code, wie ein Anwendungsprogramm 545, das im Arbeitsspeicher 535 enthalten ist, integriert sein können. Solche Anweisungen können in den Arbeitsspeicher 535 von einem anderen computerlesbaren Medium, wie einem oder mehreren der Speicher 525, eingelesen werden. Lediglich als Beispiel könnte die Ausführung der im Arbeitsspeicher 535 enthaltenen Befehlsfolgen den/die Prozessor(en) 510 veranlassen, eine oder mehrere Schritte der beschriebenen Verfahren oder Funktionen des Systems durchzuführen.

Die Begriffe "maschinenlesbares Medium" und "computerlesbares Medium", wie sie hier verwendet werden, beziehen sich auf jedes Medium, das an der Bereitstellung von Daten beteiligt ist, die eine Datenverarbeitungseinheit veranlassen, in einer bestimmten Weise zu arbeiten. In einer Ausführungsform, die unter Verwendung der Datenverarbeitungseinheit 4 implementiert wird, können verschiedene computerlesbare Medien an der Bereitstellung von Anweisungen/Codes für den/die Prozessor(en) 510 zur Ausführung beteiligt sein und/oder zum Speichern und/oder Übertragen solcher Anweisungen/Codes verwendet werden. In vielen Implementierungen ist ein computerlesbares Medium ein physisches und/oder greifbares Speichermedium. Ein solches Medium kann die Form eines nichtflüchtigen Mediums oder eines flüchtigen Mediums haben. Zu den nichtflüchtigen Medien gehören beispielsweise optische und/oder magnetische Platten, wie die Speicher 525. Zu den flüchtigen Medien gehören unter anderem dynamische Speicher, wie der Arbeitsspeicher 535.

Das Kommunikationssubsystem 530 und/oder seine Komponenten empfangen üblicherweise Signale, und der Bus 505 kann dann die Signale und/oder die Daten, Anweisungen usw., die von den Signalen getragen werden, zum Arbeitsspeicher 535 transportieren, aus dem der/die Prozessor(en) 510 die Anweisungen abruft und ausführt. Die vom Arbeitsspeicher 535 empfangenen Anweisungen können optional vor oder nach der Ausführung durch den/die Prozessor(en) 510 auf Speicher 525 gespeichert werden.

Die Erfindung ist nicht auf die dargestellten und beschriebenen Ausführungsbeispiele beschränkt, sondern umfasst auch alle im Sinne der Erfindung gleichwirkenden Ausführungen. Es wird ausdrücklich betont, dass die Ausführungsbeispiele nicht auf alle Merkmale in Kombination beschränkt sind, vielmehr kann jedes einzelne Teilmerkmal auch losgelöst von allen anderen Teilmerkmalen für sich eine erfinderische Bedeutung haben. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmale definiert sein. Dies bedeutet, dass grundsätzlich praktisch jedes Einzelmerkmal des Anspruchs 1 weggelassen beziehungsweise durch mindestens ein an anderer Stelle der Anmeldung offenbartes Einzelmerkmal ersetzt werden kann.

### Bezugszeichenliste

- 1: System
- 2: Objekt
- 3: Arbeitsgerät
- 4: Datenverarbeitungseinheit
- 4a: Erster Teil
- 4b: Zweiter Teil
- 5: Gehäuse
- 6: Netzwerk
- 7: Funk
- 8: Sensoreinheit
- 9: Umgebung
- 10: Ausschnitt

- 200: Erfassen
- 205: Erkennen
- 210: Auswählen
- 211: Anwenden zweiter Bildverarbeitungsfilter
- 215: Anwenden erster Bildverarbeitungsfilter
- 220: Selektieren
- 225: Zuordnen
- 230: Überprüfen
- 235: Anwenden dritter Bildverarbeitungsfilter
- 240: Anwenden Bildverarbeitungsfilter zur Kantenerkennung
- 245: Überprüfen
- 250: Anwenden vierter Bildverarbeitungsfilter
- 255: Erzeugen von Navigationsdaten
- 401: Projizierte Punkte
- 402: Rasterkarte
- 403: Navigationspfad

- 505: Bus
- 510: Prozessor
- 515: Eingabegerät
- 520: Ausgabegerät
- 525: Speicher
- 530: Kommunikationssubsystem
- 535: Arbeitsspeicher
- 540: Betriebssystem
- 545: Anwendungsprogramm

## Patentansprüche

1. System (1) zur räumlichen Lokalisierung mindestens eines Objekts (2), aufweisend mindestens ein Arbeitsgerät (3) und mindestens eine Datenverarbeitungseinheit (4,4a,4b), wobei das Arbeitsgerät (3) mindestens eine Sensoreinheit (8) aufweist und zur autonomen Fortbewegung in einer Umgebung (9) ausgebildet und eingerichtet ist,
wobei die Datenverarbeitungseinheit (4,4a,4b) mindestens einen Prozessor (510) und mindestens einen Speicher (525) aufweist,
wobei die Sensoreinheit (8) zum Erfassen mindestens eines Bilddatensatzes ausgebildet und eingerichtet ist, wobei der Bilddatensatz zumindest Bilddaten und räumliche Umgebungsdaten umfasst,
wobei die Datenverarbeitungseinheit (4,4a,4b)
- zum Erkennen (205) mindestens eines Objekts (2) in den Bilddaten unter Verwendung mindestens eines Algorithmus zur Objekterkennung,
- zum Auswählen (210) mindestens eines Ausschnitts (10) aus den Bilddaten, wobei der Ausschnitt (10) zumindest das Objekt (2) beinhaltet,
- zum Anwenden (215) mindestens eines ersten Bildverarbeitungsfilters zur Kantenerkennung auf den Ausschnitt (10),
- zum Selektieren (220) mindestens eines Punktes einer erkannten Kante anhand des Abstands des Punktes zu mindestens einem Referenzelement in den Bilddaten, und
- zum Zuordnen (225) mindestens eines Abstandswert zu dem Punkt unter Verwendung der räumlichen Umgebungsdaten ausgebildet und eingerichtet ist.

2. System (1) nach Anspruch 1,
**dadurch gekennzeichnet, dass**
zumindest ein Teil (4a) der Datenverarbeitungseinheit (4) in dem Arbeitsgerät (3) angeordnet ist und/oder dass zumindest ein Teil (4b) der Datenverarbeitungseinheit (4) über ein Datennetz (6) mit dem Arbeitsgerät (3) verbindbar ist.

3. System (1) nach Anspruch 1 oder 2,
**dadurch gekennzeichnet, dass**
die Datenverarbeitungseinheit (4,4a,4b) zum Selektieren (220) einer Mehrzahl von Punkten der Kante und zum Zuordnen mindestens eines Abstandswerts zu jedem Punkt ausgebildet ist.

4. System (1) nach Anspruch 3,
**dadurch gekennzeichnet, dass**
das Selektieren (220) in einer Spalte einer Mehrzahl von nebeneinander angeordneten Spalten des Ausschnitts (10) erfolgt.

5. System (1) nach einem der Ansprüche 1 bis 4,
**dadurch gekennzeichnet, dass**
die Datenverarbeitungseinheit (4,4a,4b) zum Erzeugen von Navigationsdaten unter Verwendung des Punktes mit zugeordnetem Abstandswert ausgebildet und eingerichtet ist, insbesondere dass das Erzeugen von Navigationsdaten das Projizieren des Punktes in mindestens eine Rasterkarte beinhaltet.

6. System (1) nach Anspruch 5,
**dadurch gekennzeichnet, dass**
das Erzeugen (255) von Navigationsdaten das Kennzeichnen mindestens einer Zelle der Rasterkarte beinhaltet, und dass zumindest die gekennzeichnete Zelle von dem Arbeitsgerät (3) bei einer Bewegung durch die Umgebung (9) gemieden wird.

7. System (1) nach einem der Ansprüche 1 bis 6,
**dadurch gekennzeichnet, dass**
der erste Bildverarbeitungsfilter zur Kantenerkennung einen Canny-Algorithmus, insbesondere einen Canny-Algorithmus mit variablen Schwellenwerten, einen Sobel-Operator, einen Scharr-Operator, einen Laplace-Filter, einen Prewitt-Operator, einen Roberts-Operator oder einen Kirsch-Operator beinhaltet.

8. System (1) nach einem der Ansprüche 1 bis 7,
**dadurch gekennzeichnet, dass**
die Datenverarbeitungseinheit (4,4a,4b) zum Anwenden (211) mindestens eines zweiten Bildverarbeitungsfilters zum Reduzieren von Rauschen in dem Ausschnitt (10) ausgebildet und eingerichtet ist, wobei das Anwenden (211) des zweiten Bildverarbeitungsfilters vor dem Anwenden (215) des ersten Bildverarbeitungsfilters erfolgt, insbesondere dass der zweite Bildverarbeitungsfilter einen Tiefpassfilter, vorzugsweise einen Gaußschen Weichzeichner, beinhaltet.

9. System (1) einem der Ansprüche 3 bis 8,
**dadurch gekennzeichnet, dass**
die Datenverarbeitungseinheit (4,4a,4b) zum Überprüfen (230) ausgebildet und eingerichtet ist, ob eine Anzahl von durch das Anwenden (215) des ersten Bildverarbeitungsfilters erkannten Punkten einer Kante des Objekts (2) einen vorbestimmten Schwellenwert erreicht oder überschreitet, und dass bei Erreichen oder Überschreiten des Schwellenwerts das Selektieren (220) erfolgt, und dass die Datenverarbeitungseinheit (4,4a,4b) zum Anwenden mindestens eines dritten Bildverarbeitungsfilters auf den Ausschnitt (10) ausgebildet und eingerichtet ist, wenn der vorbestimmte Schwellenwert unterschritten wird.

10. System (1) nach Anspruch 9,
**dadurch gekennzeichnet, dass**
der dritte Bildverarbeitungsfilter eine adaptive Histogrammangleichung (AHE) oder eine kontrastbegrenzte adaptive Histogrammangleichung (CLAHE) beinhaltet.

11. System (1) nach Anspruch 9 oder 10,
**dadurch gekennzeichnet, dass**
die Datenverarbeitungseinheit (4,4a,4b) zum Anwenden (240) eines Bildverarbeitungsfilters zur Kantenerkennung auf den Ausschnitt (10) nach dem Anwenden (235) des dritten Bildverarbeitungsfilters ausgebildet und eingerichtet ist, insbesondere dass der nach dem Anwenden (235) des dritten Bildverarbeitungsfilters angewendete Bildverarbeitungsfilter der erste Bildverarbeitungsfilter ist.

12. System (1) nach Anspruch 11,
**dadurch gekennzeichnet, dass**
die Datenverarbeitungseinheit (4,4a,4b) zum Überprüfen (245) ausgebildet und eingerichtet ist, ob eine Anzahl von durch das Anwenden des Bildverarbeitungsfilters zur Kantenerkennung erkannten Punkten einer Kante, nach dem Anwenden (235) des dritten Bildverarbeitungsfilters, einen vorbestimmten Schwellenwert erreicht oder überschreitet, und dass bei Erreichen oder Überschreiten des Schwellenwerts das Selektieren (220) erfolgt, und dass die Datenverarbeitungseinheit (4,4a,4b) zum Anwenden (250) mindestens eines vierten Bildverarbeitungsfilters auf den Ausschnitt (10) ausgebildet und eingerichtet ist, wenn der vorbestimmte Schwellenwert unterschritten wird, insbesondere dass der vierte Bildverarbeitungsfilter ein Otsu-Verfahren beinhaltet.

13. System (1) nach Anspruch 11 oder 12,
**dadurch gekennzeichnet, dass**
nach dem Anwenden des vierten Bildverarbeitungsfilters das Selektieren (220) erfolgt.

14. Verfahren zur räumlichen Lokalisierung mindestens eines Objekts, insbesondere zumindest mit einem Arbeitsgerät (3), gekennzeichnet zumindest durch folgende Verfahrensschritte:
- Erfassen (200) mindestens eines Bilddatensatzes mit mindestens einer Sensoreinheit (8), wobei der Bilddatensatz zumindest Bilddaten und räumliche Umgebungsdaten umfasst,
- Erkennen (205) mindestens eines Objekts (2) in den Bilddaten unter Verwendung mindestens eines Algorithmus zur Objekterkennung,
- Auswählen (210) mindestens eines Ausschnitts (10) aus den Bilddaten, wobei der Ausschnitt (10) zumindest das Objekt (2) beinhaltet,
- Anwenden (215) mindestens eines ersten Bildverarbeitungsfilters zur Kantenerkennung auf den Ausschnitt (10),
- Selektieren (220) mindestens eines Punktes einer erkannten Kante anhand des Abstands des Punktes zu mindestens einem Referenzelement in den Bilddaten, und
- Zuordnen (225) mindestens eines Abstandswerts zu dem Punkt unter Verwendung der räumlichen Umgebungsdaten.

15. Computerprogrammprodukt, umfassend Befehle, die bei der Ausführung des Programms durch eine Datenverarbeitungseinheit (4,4a,4b), mit mindestens einem Prozessor (510) und mindestens einem Speicher (525), die Datenverarbeitungseinheit (4,4a,4b) veranlassen, die Schritte des Verfahrens nach Anspruch 14 auszuführen.
